# EUROPÄISCHE PATENTANMELDUNG

(11) **EP 1 724 138 A2**
(43) Veröffentlichungstag der Anmeldung: **22.11.2006**
(21) Anmeldenummer: 06008993.5
(22) Anmeldetag: 29.04.2006
(51) Int. Cl.: B60J 5/06, E05D 15/10, E05F 7/04, E05F 15/14

(54) **Schiebetür oder Schwenkschiebetür für Fahrzeuge des öffentlichen Personennah- und fernverkehrs**

(30) Priorität: 21.05.2005 DE 202005007983 U
(71) Anmelder: Gebr. Bode GmbH & Co. KG, 34123 Kassel (DE)
(72) Erfinder: Pellgrini, Andreas, 34590 Wabern (DE); Horn, Manfred, verstorben (DE)
(74) Vertreter: Feder, Wolf-Dietrich

(57) **Zusammenfassung**

Eine Schiebetür oder Schwenkschiebetür für Fahrzeuge des öffentlichen Personennah- und -fernverkehrs mit mindestens einem Türblatt, welches über einen Führungsschlitten (3) an einem in horizontaler Richtung verlaufenden Führungselement (4) verschiebbar aufgehängt und über in mindestens einer Führungsschiene (5) laufende Führungsrollen (5.1) geführt ist und mit einer Antriebseinrichtung für die Türbewegung, welche ein von einem Motor antreibbares, parallel zum Führungselement (4) verlaufendes Antriebselement aufweist und ein Übertragungselement, das mit dem Türblatt verbunden ist. Die Antriebseinrichtung ist auf einem fest mit dem Türportal verbundenen, in horizontaler Richtung verlaufenden Antriebsträger gelagert. Am Führungsschlitten (3) ist eine Stabilisierungsrolle (12) angeordnet, die am Ende der Schließbewegung in einen, am Antriebsträger angeordneten, Einlaufkeil (13) einfährt und dort im geschlossenen Zustand der Tür festgehalten ist.

## Beschreibung

Die Erfindung betrifft eine Schiebetür oder Schwenkschiebetür für Fahrzeuge des öffentlichen Personennah- und -fernverkehrs mit den Merkmalen aus dem Oberbegriff des Patentanspruchs 1. Eine Schwenkschiebetür mit diesen Merkmalen ist prinzipiell in DE 43 34 403 A1 beschrieben.

Bei dieser bekannten Schwenkschiebetür besitzt die Antriebseinrichtung für die Türbewegung eine von einem Motor antreibbare, parallel zum Führungselement verlaufende Schraubspindel und eine Spindelmutter, die mit dem Türblatt verbunden ist, wobei das von der Antriebsseite abgewandte Ende der Schraubspindel über eine schaltbare Kupplung oder Bremse in Kombination mit einem Freilauf an einem fest mit dem Türportal verbundenen Antriebsträger gelagert ist.

Es sind auch Schwenkschiebetüren mit anders ausgebildeter Antriebseinrichtung bekannt, beispielsweise mit einem von einem Motor angetriebenen Zahnriemen, über den die Türblätter bewegt werden.

Der Erfindung liegt die Aufgabe zugrunde, eine Schiebetür oder Schwenkschiebetür mit den Merkmalen aus dem Oberbegriff des Patentanspruchs 1 so auszugestalten, dass eine gute Stabilisierung der Türblätter in der geschlossenen Position erreicht wird. Weiterhin sollte es möglich sein, die Symmetrie des Antriebs leicht einzustellen und sie auch an der Nebenschließkante zu stabilisieren. Die Möglichkeiten, die Tür im Notbetrieb manuell zu öffnen, sollten erhalten bleiben.

Die Lösung dieser Aufgabe erfolgt prinzipiell mit den Merkmalen aus dem kennzeichnenden Teil des Patentanspruchs 1. Vorteilhafte Weiterbildungen der Erfindung sind in den abhängigen Ansprüchen beschrieben.

Ein Grundgedanke der Erfindung besteht darin, am Führungsschlitten der Antriebseinrichtung eine Stabilisierungsrolle anzuordnen, die am Ende der Schließbewegung in einen am Antriebsträger angeordneten Einlaufkeil einfährt und dort festgehalten wird, so dass auf diese Weise im geschlossenen Zustand das Türblatt stabilisiert ist.

Eine vorteilhafte Ausführungsform der erfindungsgemäßen Tür, bei der in an sich bekannter Weise die Antriebseinrichtung für die Türbewegung eine von dem Motor antreibbare, parellel zum Führungselement verlaufende Schraubspindel aufweist und eine Spindelmutter, die mit dem Türblatt verbunden ist, wobei das von der Antriebsseite abgewandte Ende der Schraubspindel über eine schaltbare Kupplung oder Bremse in Kombination mit einem Freilauf an dem Antriebsträger gelagert ist, zeichnet sich gemäß der weiteren Erfmdung dadurch aus, dass bei der mit zwei gegenläufigen Türblättern ausgebildeten Tür jedem Türblatt eine von zwei koaxial zueinander angeordneten Schraubspindeln zugeordnet ist, deren Spindelmutter jeweils mit einem der Türblätter verbunden ist und die erste Schraubspindel an ihrem von der zweiten Schraubspindel abgewandten Ende angetrieben ist und die zweite Schraubspindel an ihrem von der ersten Schraubspindel abgewandten Ende über die schaltbare Kupplung oder Bremse in Kombination mit dem Freilauf am Antriebsträger gelagert ist und die beiden Schraubspindeln an den einander zugewandten Enden über eine in Drehrichtung einstellbare Kupplung miteinander verbunden sind.

Weitere Merkmale und Vorteile der erfindungsgemäßen Schiebetür oder Schwenkschiebetür werden im folgenden anhand eines Ausführungsbeispiels für eine Schwenkschiebetür erläutert, die in den beigefügten Zeichnungen dargestellt ist.

In den Zeichnungen zeigen:
- Fig. 1: eine zweiflüglige Schwenkschiebetür in einer schematischen Ansicht aus dem Fahrzeuginneren;
- Fig. 2: eine Ansicht auf den Antriebsträger der Schwenkschiebetür nach Fig. 1 von unten;
- Fig. 3: eine Aufsicht auf die Schwenkschiebetür nach Fig. 1 bei abgenommenen Türblättern;
- Fig. 4: in gegenüber Fig. 3 in vergrößerter Darstellung den mittleren Bereich aus Fig. 3 mit der Kupplung zwischen den Schraubspindeln;
- Fig. 5: in gegenüber Fig. 1 vergrößerter Darstellung den Bereich V aus Fig. 1;
- Fig. 6: in gegenüber Fig. 1 vergrößerter Darstellung einen Schnitt nach der Linie VI-VI in Fig. 1.

Die in den Zeichnungen dargestellte Schwenkschiebetür besitzt zwei Türblätter 1 und 1A, die innerhalb eines Türportals 2 angeordnet sind. Jedes der beiden Türblätter 1 bzw. 1A ist über einen als Rollenwagen ausgebildeten Führungsschlitten 3 bzw. 3A an einem in horizontaler Richtung verlaufenden, als Führungsrohr ausgebildeten Führungselement 4 bzw. 4A verschiebbar aufgehängt. Die Führungselemente 4 bzw. 4A sind jeweils an ihren beiden Enden über in einer horizontalen Ebene verschwenkbare, gegenläufige Schwenkarme 4.1 bzw. 4.1A mit einem Antriebsträger 9 verbunden, der fest im Türportal 2 angeordnet ist. In dieser Ausbildung sind die Führungselemente 4 bzw. 4A in Richtung quer zur Portalöffnung aus einer Innenstellung, in welcher die Türblätter 1 bzw. 1A innerhalb des Portals 2 liegen, in eine Außenstellung bewegbar, in welcher die Türblätter entlang der Außenseite des Fahrzeugs verschiebbar sind. Die Koordination der Längs- und Querbewegung der Türblätter erfolgt mittels Führungsschienen 5 bzw. 5A, in welche Führungsrollen 5.1 eingreifen, die am Führungsschlitten 3 bzw. 3A angeordnet sind.

Im unteren Bereich sind die Türblätter in üblicher Weise mit Führungsschienen 16.1 bzw. 16.1A versehen, in welche an Schwenkarmen 16 bzw. 16A angeordnete Führungsrollen eingreifen.

Die Antriebseinrichtung für die Türbewegung besitzt zwei parallel zu den Führungselementen 4 bzw. 4A verlaufende Schraubspindeln 6 bzw. 6A, auf denen jeweils eine Spindelmutter 7 bzw. 7A läuft. Die Schraubspindel 6 ist dem Türblatt 1 zugeordnet, und die Spindelmutter 7 ist über einen Rollenbolzen mit Führungsrolle mit dem Führungsschlitten 3 verbunden. In der gleichen Weise ist die Spindelmutter 7A der Schraubspindel 6A mit dem Führungsschlitten 3A verbunden. Weiterhin sind an den Führungsschlitten 3 und 3A über entsprechende Halterungen 3.1 bzw. 3.1A die Türblätter 1 und 1A befestigt.

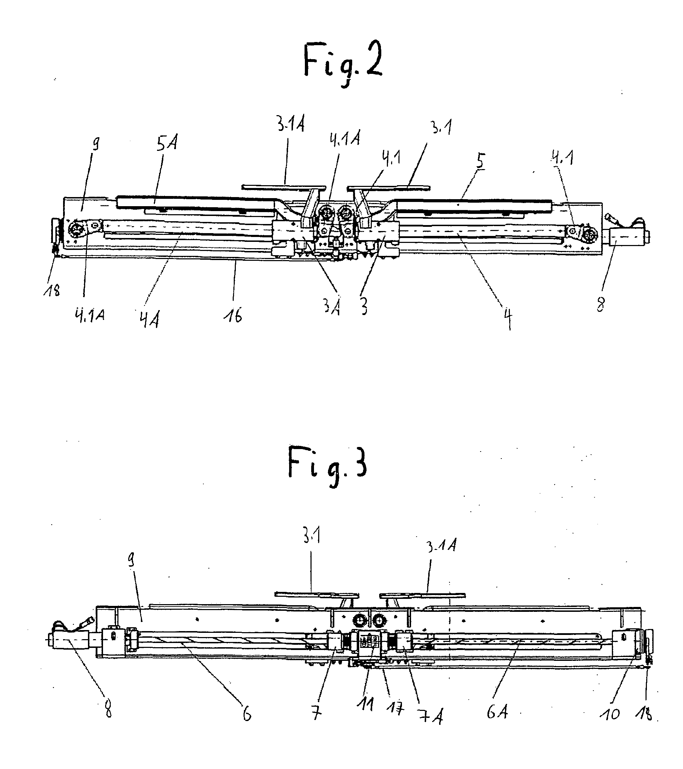

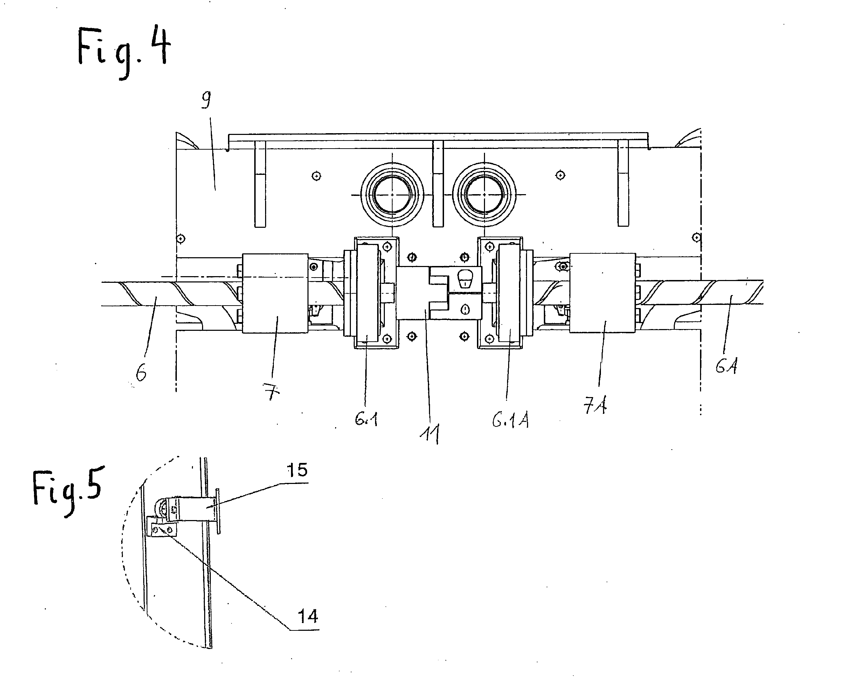

Die Schraubspindel 6 wird von einem koaxial zu ihr angeordneten und direkt an ihr angeflanschten Elektromotor 8 angetrieben und ist (siehe Fig. 4) an ihrem von der Antriebsseite abgewandten Ende über ein Lager 6.1 am Antriebsträger 9 gelagert. Weiterhin ist dieses Ende über eine in Drehrichtung verstellbare Kupplung 11 mit dem Ende einer zweiten Schraubspindel 6A gekoppelt, welches über ein Lager 6.1A am Antriebsträger 9 gelagert ist. Das von der Koppelstelle abgewandte Ende dieser Schraubspindel 6A ist (siehe Fig. 3) über eine schaltbare Kupplung oder Bremse 10 in Kombination mit einem Freilauf am Antriebsträger 9 gelagert. Die Kupplung oder Bremse 10 kann als elektromagnetische Federkraftbremse oder -kupplung ausgebildet sein, wobei im stromlosen Zustand der Bremse oder Kupplung die Schraubspindeln 6 bzw. 6A in Öffnungsrichtung der Tür blockiert sind.

Selbstverständlich kann der Motor 8 auch außerhalb der Achse der Schraubspindel 6 angeordnet sein und die Schraubspindel über ein flexibles Antriebselement, beispielsweise einen Zahnriemen oder ein Getriebe, antreiben.

Die Justierung der beiden Schraubspindeln 6 und 6A gegeneinander erfolgt über die Kupplung 11.

Im Normalbetrieb der Tür wird die schaltbare Kupplung oder Bremse 10 für den Öffnungsvorgang mit Strom versorgt und dadurch gelöst. Durch den Motor 8 können dann die Schraubspindeln bewegt werden. Der Freilauf ermöglicht jederzeit das Verschieben der Türblätter 1 bzw. l A von Hand in Geschlossenrichtung. Im Notfall muss die Kupplung oder Bremse manuell gelöst werden, um die Tür von Hand öffnen zu können. Hierzu dient ein nicht dargestellter Bowdenzug, der über ein Koppelgestänge 17 einen Hebel 18 betätigt, durch welchen die Bremse mechanisch gelöst wird. Dieser Zustand wird so lange gehalten, bis die Tür von Hand oder elektrisch wieder zugefahren worden ist und ein nicht dargestellter Mechanismus die Bremse wieder eingreifen lässt.

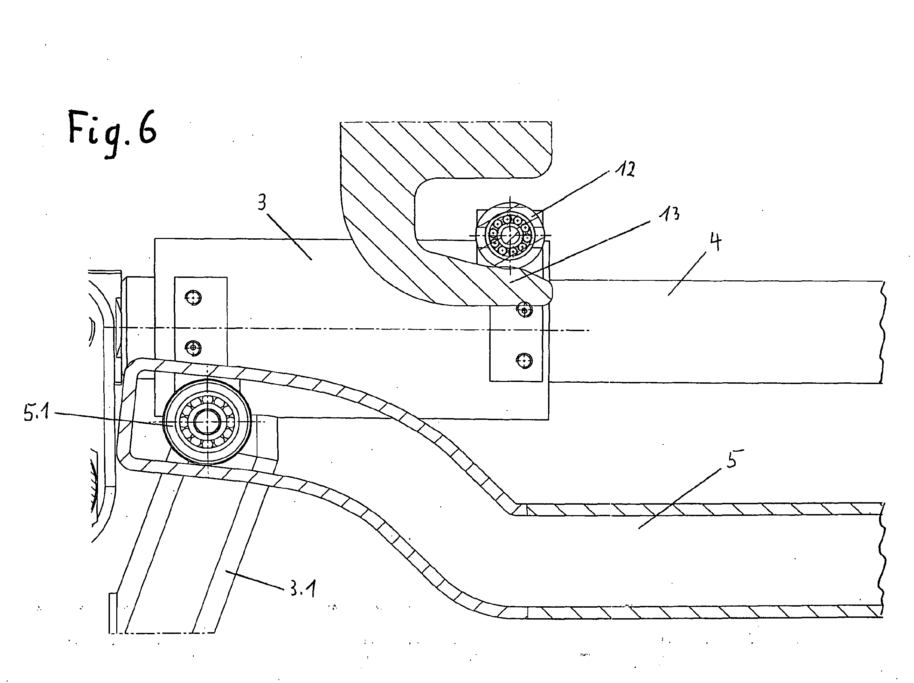

Zur Stabilisierung der Türblätter 1 bzw. 1A im geschlossenen Zustand der Tür sind besondere Maßnahmen vorgesehen. Wie insbesondere aus Fig. 6 zu entnehmen, ist an den Führungsschlitten 3 und 3A eine zusätzliche Führungsrolle 12 angeordnet, welche am Ende der Schließbewegung der Türblätter 1 bzw. 1A in einen am Antriebsträger 9 angeordneten Einlaufkeil 13 einfährt, um ein Ausschwenken des Führungselementes 4 an der Nebenschließkante zu verhindern.

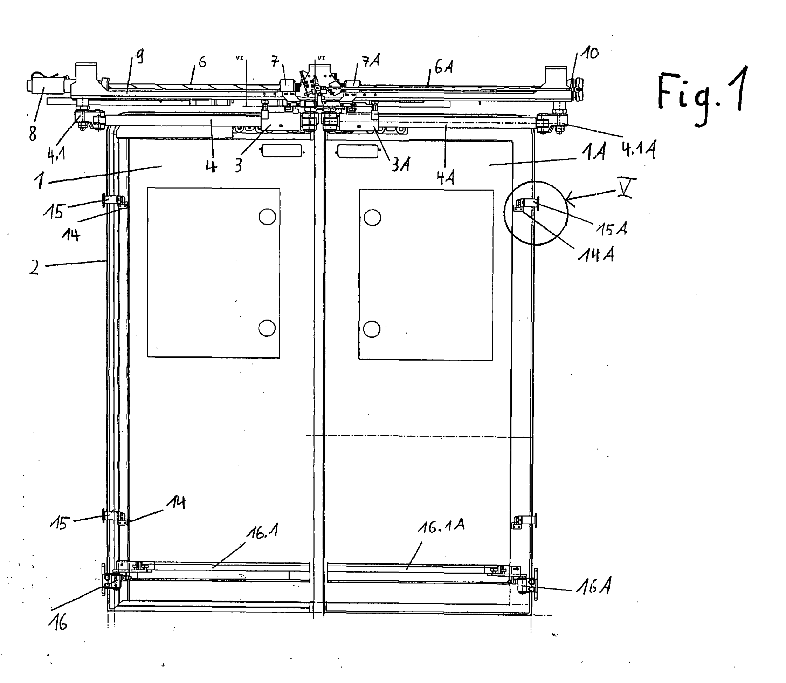

Um die Türblätter 1 bzw. 1A an der Nebenschließkante zu stabilisieren und dem Moment um die Achse des Führungselementes 4 bzw. 4A durch Druck von innen entgegenzuwirken, sind zusätzliche Aushebesicherungen angebracht. Diese Aushebesicherungen bestehen jeweils aus einem Auflauflceil 14 (s. Fig. 1 und 5), der am Türblatt 1 bzw. 1A befestigt ist, sowie einer entsprechenden, am Portal 2 positionierten Rolle 15, die auf einem Hebel drehbar gelagert ist. Beim Schließen der Tür setzt sich der Auflaufkeil 14 unter die Rolle 15 und stabilisiert das Türblatt an der Nebenschließkante. Dadurch kann auf den Einsatz einer Drehsäule verzichtet werden.

Ein wichtiger Vorteil der Antriebseinrichtung mit Schraubspindeln besteht darin, dass keine fixe Endlage, beispielsweise durch einen Totpunkt vorgegeben, justiert werden muss, da der Spindeltrieb variabel in der Geschlossenstellung ist.

## Patentansprüche

1. Schiebetür oder Schwenkschiebetür für Fahrzeuge des öffentlichen Personennah- und -fernverkehrs mit mindestens einem Türblatt (1, 1A), welches über einen Führungsschlitten (3, 3A) an einem in horizontaler Richtung verlaufenden Führungselement (4, 4A) verschiebbar aufgehängt und über in mindestens einer Führungsschiene (5, 5A) laufende Führungsrollen (5.1) geführt ist, und mit einer Antriebseinrichtung für die Türbewegung, welche ein von einem Motor (8) antreibbares, parallel zum Führungselement (4, 4A) verlaufendes Antriebselement (6, 6A) aufweist und ein Übertragungselement (7, 7A), das mit dem Türblatt verbunden ist, wobei die Antriebseinrichtung an einem fest mit dem Türportal verbundenen, in horizontaler Richtung verlaufenden Antriebsträger (9) gelagert ist, **dadurch gekennzeichnet, dass** am Führungsschlitten (3, 3A) eine Stabilisierungsrolle (12) angeordnet ist, die am Ende der Schließbewegung in einen am Antriebsträger (9) angeordneten Einlaufkeil (13) einfährt und dort im geschlossenen Zustand der Tür festgehalten ist.

2. Schiebetür oder Schwenkschiebetür nach Anspruch 1, **dadurch gekennzeichnet, dass** die Antriebseinrichtung für die Türbewegung als Antriebselement eine von dem Motor (8) antreibbare, parallel zum Führungselement (4, 4A) verlaufende Schraubspindel (6, 6A) aufweist und als Übertragungselement eine Spindelmutter (7, 7A), die mit dem Türblatt (1, 1A) verbunden ist, wobei das von der Antriebsseite abgewandte Ende der Schraubspindel über eine schaltbare Kupplung oder Bremse (10) in Kombination mit einem Freilauf am Antriebsträger (9) gelagert ist.

3. Schiebetür oder Schwenkschiebetür nach Anspruch 2, **dadurch gekennzeichnet, dass** bei einer Schiebe- oder Schwenkschiebetür mit zwei gegenläufigen Türblättern jedem Türblatt (1, 1A) eine von zwei koaxial zueinander angeordneten Schraubspindeln (6, 6A) zugeordnet ist, deren Spindelmutter (7, 7A) jeweils mit einem der Türblätter verbunden ist, und die erste Schraubspindel (6) an ihrem von der zweiten Schraubspindel (6A) abgewandten Ende angetrieben ist und die zweite Schraubspindel (6A) an ihrem von der ersten Schraubspindel (6) abgewandten Ende über die schaltbare Kupplung oder Bremse (10) in Kombination mit dem Freilauf am Antriebsträger (9) gelagert ist und die beiden Schraubspindeln (6, 6A) an den einander zugewandten Enden über eine in Drehrichtung einstellbare Kupplung (11) miteinander verbunden sind.

4. Schiebetür oder Schwenkschiebetür nach einem der Ansprüche 1 bis 3, **dadurch gekennzeichnet, dass** das Führungselement (4, 4A) an in einer horizontalen Ebene verschwenkbaren Schwenkarmen (4.1, 4.1A) angeordnet und aus einer innerhalb des Türportals (2) angeordneten Innenstellung in Richtung quer zur Portalöffnung in eine Außenstellung und zurück bewegbar ist.

5. Schiebetür oder Schwenkschiebetür nach Anspruch 4, **dadurch gekennzeichnet, dass** die Spindelmutter (7, 7A) jeweils über Rollenbolzen mit Führungsrolle mit dem jeweiligen Führungsschlitten (3, 3A) verbunden ist.

6. Schiebetür oder Schwenkschiebetür nach einem der Ansprüche 1 bis 5, **dadurch gekennzeichnet, dass** der Führungsschlitten (3, 3A) als Rollenwagen ausgebildet ist, welcher an einem als Führungsrohr ausgebildeten Führunselement (4, 4A) aufgehängt ist.

7. Schiebetür oder Schwenkschiebetür nach Anspruch 3, **dadurch gekennzeichnet, dass** die erste Schraubspindel (6) von einem koaxial zu ihr angeordneten und direkt angeflanschten Motor (8) angetrieben ist.

8. Schiebetür oder Schwenkschiebetür nach Anspruch 3, **dadurch gekennzeichnet, dass** die erste Schraubspindel von einem außerhalb ihrer Drehachse angeordneten Motor über ein flexibles Antriebselement oder ein Getriebe angetrieben ist.

9. Schiebetür oder Schwenkschiebetür nach Anspruch 3 und ggf. einem der Ansprüche 4 bis 8, **dadurch gekennzeichnet, dass** die zweite Schraubspindel (6A) an ihrem von der ersten Schraubspindel (6) abgewandten Ende über eine elektromagnetische Federkraft-bremse oder -kupplung (10) in Kombination mit einem Freilauf am Antriebsträger (9) gelagert ist, wobei im stromlosen Zustand der Bremse oder Kupplung die Schraubspindeln (6, 6A) in Öffnungsrichtung blockiert sind.

10. Schiebetür oder Schwenkschiebetür nach Anspruch 9, **dadurch gekennzeichnet, dass** im Notbetrieb die Bremse oder Kupplung (10) manuell lösbar ist.

11. Schiebetür oder Schwenkschiebetür nach Anspruch 10, **dadurch gekennzeichnet, dass** die Bremse oder Kupplung (10) über einen zu einem Nothebel (18) geführten Bowdenzug und ein Koppelgestänge (17) lösbar ist.
